Europäisches Patentamt

European Patent Office

Office européen des brevets

(11) Publication number: **0 367 194**
**A2**

## EUROPEAN PATENT APPLICATION

(21) Application number: 89120123.8

(51) Int. Cl.5 **C03C 25/02**

(22) Date of filing: 30.10.89

(30) Priority: 01.11.88 DK 6087/88

(43) Date of publication of application:
09.05.90 Bulletin 90/19

(84) Designated Contracting States:
**AT BE DE GB LU NL**

(71) Applicant: **Rockwool International A/S**
**501, Hovedgaden**
**DK-2640 Hedehusene(DK)**

(72) Inventor: **Hansen, Erling Lennart**
**Munkegardsvej 11**
**DK-2860 Soborg(DK)**

(74) Representative: **Patentanwälte Leinweber &**
**Zimmermann**
**Rosental 7/II Aufg.**
**D-8000 München 2(DE)**

(54) Method of preparing a binder-containing mineral wool product.

(57) Method of preparing a binder-containing mineral wool product by converting a mineral fibre forming melt into fibres by means of one or more streams of air and treating the fibres with a silane-containing coupling agent before a binder is supplied to the mineral fibres and they are deposited on a support.

EP 0 367 194 A2

## Method of preparing a binder-containing mineral wool product.

This invention relates to a method of preparing a binder-containing mineral wool product comprising the steps of converting a molten, mineral fibre forming material into mineral fibres with one or more streams of air, depositing the fibres on a support and supplying to the fibres a binder and a coupling agent comprising a silane.

A method and an apparatus for preparing conventional mineral wool products are disclosed in i.a. DK patent specification No. 146.297.

A preferred embodiment of this prior art method is the socalled cascade method which involves the use of a plurality. preferably 4, rapidly rotating spinner wheels which are mounted in such a manner relative one another that molten material which is introduced onto the peripheral surface of the first spinner wheel throws the melt against the peripheral surface of the next spinner wheel. and so on.

The spinner used for carrying out the prior art method may comprise an air slot mounted concentrically with the peripheral surface of a corresponding spinner wheel and serving to supply air to the said peripheral surface. The air stream thus formed preferably has both an axial and a tangential speed component relative to the spinner wheel.

The binder may be supplied to the fibres in the spinning chamber i.e. shortly after the formation of the fibres. or after the deposition of the fibres on the support.

The binder used is preferably a phenol-formaldehyde resin and when the binder is supplied to the fibres in the spinning chamber, it is preferably applied to the fibres by spraying a solution or dispension of the binder in said chamber. The spraying of the binder may be effected with a plurality of spray nozzles. In practice, the binder is supplied to the fibres partly through nozzles mounted in such a manner that the binder-containing air streams generated in said nozzles flow parallel with the air streams moving along the circumferential surface of the spinner wheels and partly through openings in the front of a spray wheel mounted on the front side of af least one spinner wheel.

It is well known to provide glass fibre strands for use in the production of glass fibre reinforced plastic products and formed by drawing continuous filaments through orifices with a coating of a silane-containing coupling agent to improve the bond between the resin and the surface of the glass filaments. cf. US patent specifications Nos. 3.168.389, 3.276.853 and 3.676.094. The application of a coupling agent on such glass filaments may be effected by passing the filaments over an anti-set off roller or through a compartment containing a gaseous or foamed coupling agent.

It is also well known to use a silane-containing coupling agent to improve the bond between mineral wool fibres and phenol-formaldehyde resins in connection with the production of coherent mineral wool products. Thus, it has long been known to add silane to the binder which is supplied to the fibrous material present in the spinning chamber.

NO patent specification No. 106.917 discloses a method of supplying both oil containing a silane coupling agent and an aqueous phenolic resin solution through nozzles mounted at short distance in front of the place as which the fibres are released from the spinning wheel.

The invention is based on the discovery that the delamination strength after ageing of mineral wool products can be improved substantially by treating the mineral wool fibres with a silane-containing coupling agent before the application of binder.

Thus the method of the invention is characterized in that the fibres are contacted with the silane-containing coupling agent before the binder is applied to the fibres.

In a preferred embodiment of the method of the invention wherein the mineral fibre forming melt is introduced onto the peripheral surface of a rapidly rotating spinner wheel and is thrown out from said surface while being subjected to the influence of a stream of air which is advanced along said surface, the silane-containing coupling agent is added to the stream of air advanced along the peripheral surface of the spinner wheel. By supplying the coupling agent to the fibres in this manner the coupling agent is contacted with the surfaces of the fibres during or shortly after the formation of the fibres and consequently it is possible to supply binder to the fibres in a conventional manner, viz. either through the above mentioned nozzles mounted at a suitable distance from the periphery of the spinner wheels or through the above mentioned openings in the front end of a spray wheel placed in the front end of one or more spinner wheels or by a combination of the two methods.

In case the binder is supplied to the fibres through nozzles provided on the down-stream side of the spinner wheel within the spinning chamber the silane coupling agent may be supplied, if desired, through said openings in the spray wheel.

The improved delamination strength of mineral wool products prepared by the method of the invention

2

has been demonstrated by various tests carried out on different production lines used in commercial production.

In these tests silane in the form of an aqueous solution containing about 2.5% gamma-aminopropyltriethoxy silane was supplied to the stream of air advanced along the peripheral surface of the spinner wheel and silane was simultaneously supplied to the fibres together with a binder through a plurality of nozzles and openings in the spray wheel.

In a first test the additional amount of silane added was 0.5% based on the dry matter of the binder and the total amount of silane added was 1%. Also tests with no additional silane were carried out. The evaluation of the delamination strength after ageing of the mineral wool products prepared was based on a scale where the value 100 corresponds to the delamination strength of a mineral wool product containing no additional silane (blind test). The results obtained will appear from the following table 1:

Table 1

|  | Delamination strength after ageing |
| --- | --- |
| Blind test (no further addition of silane) | 100 |
| Test 1 (Production line I) | 124,3 |
| Test 2 (Production line II) | 123,9 |
| Test 3 (Production line III) | 127,4 |

In two further tests additional 0.5% silane was added to the mixture of silane and binder supplied through the nozzles and the spray wheel. Thus, the amount of silane added was doubled compared to a conventional method.

The data set forth in the following table 2 were obtained by the two further tests.

Table 2

|  | Delamination strength after ageing |
| --- | --- |
| Blind test (no further addition of silane) | 100 |
| Test 4 (Production line I) | 111,4 |
| Test 5 (Production line II) | 116,4 |

A comparison of the results set forth in tables 1 and 2 shows that a substantially increased delamination strength is obtained by adding silane through the air nozzles instead of effecting a corresponding increase of the amount of silane supplied together with the binder.

The increase in delamination strength amounted to about 10%.

This result was confirmed by tests in which the amount of binder was reduced in connection with the addition of 0.5% silane through the nozzles.

The results obtained as well as the result obtained by a blind test and results of test 3 and test 5 are set forth in table 3 below.

Table 3

| | Delamination strength after ageing |
|---|---|
| Test 3 | 127.4 |
| Test 5 | 116.4 |
| Test 6 (additional 0.5% silane supplied through the nozzles in connection with 10% reduction of binder) | 97.3 |
| Test 7 (additional 0.5% silane supplied through the nozzles in connection with 20% reduction of binder) | 91.8 |
| Test 8 (no additional silane in connection with 20% reduction of binder) | 72.6 |

As will appear from the above results the method of the invention permits the binder consumption to be reduced by about 10% without decreasing the delamination strength after ageing compared to a conventional method.

A reduction of the amount of binder is advantageous not only for economic but also for environmental reasons because it allows the emission of formaldehyde and phenol from the curing oven to be reduced correspondingly.

The silanes used in the method of the invention may be of the same types as those previously used in admixture with the binder. Examples of useful silanes are aminofunctional and glycidyletherfunctional silanes.

## Claims

1. Method of preparing a binder-containing mineral wool product comprising the steps of converting a molten, mineral wool forming material into mineral fibres with one or more streams of air, depositing the fibres on a support and supplying to the fibres a binder and a coupling agent comprising a silane, **characterized** in that the fibres are contacted with the silane-containing coupling agent before the binder is applied to the fibres.

2. Method according to claim 1 wherein the mineral fibre forming melt is supplied to the peripheral surface of a rapidly rotating spinner wheel and is discharged therefrom under the influence of a stream of air advanced along the peripheral surface of the spinner wheel, **characterized** in that the silane-containing coupling agent is added to the stream of air advanced along the peripheral surface of the spinner wheel.

3. Method according to claim 2, **characterized** in that the binder is supplied to the fibres through nozzles mounted in a ring around the spinner wheel and/or through openings in the front of a spray wheel mounted on the front side of the spinner wheel.

4. Method according to any of the preceding claims, **characterized** in that the silane-containing coupling agent consists of a solution of an aminofunctional or glycidyletherfunctional silane.